# EUROPÄISCHE PATENTSCHRIFT

(11) **EP 0 643 463 B1**
(45) Veröffentlichungstag und Bekanntmachung des Hinweises auf die Patenterteilung: **03.09.1997**
(21) Anmeldenummer: 94111482.9
(22) Anmeldetag: 22.07.1994
(51) Int. Cl.: H02G 5/06

(54) **Isolationsträger für Stromschienen**
Insulator support for conductor rails
Support d'isolation pour barres conductrices

(30) Priorität: 09.09.1993 DE 9313600 U
(43) Veröffentlichungstag der Anmeldung: 15.03.1995
(73) Patentinhaber: REHAU AG + Co, 95111 Rehau (DE)
(72) Erfinder: Meinel, Udo, D-95111 Rehau (DE)

(56) Entgegenhaltungen:
- DE-U- 6 607 093
- FR-A- 2 148 185
- US-A- 2 732 420

## Beschreibung

Die Neuerung betrifft einen Isolationsträger.

Aus der DE-U 71 43 970 ist eine Abdeckung für Stromleitungen bekannt, die über Distanzhalter auf den Stromleitungen festgelegt ist. Diese Distanzhalter sind im Spritzguß- und Blasverfahren hergestellte Formteile, die in ihrem Haltesitz auf der Stromleitung mit Vorspannung ausgerüstet sind, so daß sie auf der Stromleitung klemmend festgelegt werden können. Die bekannten Distanzhalter besitzen Verrasterungsnasen bzw. Abstützfüße, die sich bei der Herstellung der Verbindung zwischen dem Distanzhalter und der Abdeckung an zugeordneten Wandbereichen der Abdeckung entweder abstützen oder von diesen tastend hintergriffen werden. Die bekannten Distanzhalter sind mit ihrer flächig ausgedehnten Querschnittsform und ihren tolerierten Abmessungen in erster Linie im Spritzgußverfahren herstellbar, da grundsätzlich nur bei diesen Verfahren die erforderliche Maßgenauigkeit erzielt werden kann. In begrenztem Maße ist hier allerdings auch die Herstellung im Blasverfahren anwendbar. Aus dem Prospektprogramm der REHAU AG + Co ,,Stromschienen-Abdecksysteme", Lieferprogramm E 55.100 KEH 1.90 ist eine Stromschienenabdeckung bekannt, die beispielsweise beim Bau von U-Bahnen eingesetzt werden kann. Diese Stromschienenabdeckung besteht aus einem Stromschienenschutzkasten und einem Distanzhalter. Der in dieser Veröffentlichung gezeigte Distanzhalter ist ein hohles Blasteil, welches an einem gestreckten Mittelbereich zwei voneinander abgewandt abgekröpfte Endbereiche aufweist.

Diese abgekröpften Endbereiche werden beim Einsatz auf dem Stromschienenkopfbereich hinter diesem Kopfbereich eingerastet oder eingeknöpft, so daß der Distanzhalter fest auf dem Stromschienenkopfbereich aufgerastet werden kann.

Die bekannten Distanzhalter werden in einem Abstand von ca. 0,4 bis 1 m auf die Stromschienenkopfbereiche aufgesetzt. Sie liegen mit ihren Außenwänden an den Innenwänden des Stromschienenschutzkastens an und bilden nach dessen Aufsetzen kammerartige Unterteilungen von Distanzhalter zu Distanzhalter. Dadurch entstehen in Längsrichtung der Stromschiene voneinander abgeschottet Luftpolster um die Stromschiene herum, wodurch ein Luftaustausch in Längsrichtung verhindert bzw. sehr stark eingeschränkt wird. Es kommt bei der Erwärmung der Stromschiene im Betrieb zu Wärmestauerscheinungen, da die überschüssige Wärme durch die stehenden Luftpolster nicht abgeführt werden kann. Hierdurch bedingt, kann es zu örtlich stark unterschiedlichen Längenausdehnungen der Stromschienenschutzkästen kommen, was insbesondere bei dem Übergang von Schatten- und Sonnenbereichen zu negativen Einflüssen auf das Abdeckungssystem insgesamt führen kann. Durch solche unterschiedlichen Längenausdehnungen der Stromschienenschutzkästen kann es zum Verklemmen bzw. zu einem Verschieben auf den Distanzhaltem kommen, wodurch die Distanzhalter aus ihrem Klemmsitz auf dem Stromschienenkopfbereich sogar gelöst werden können.

Um diesen Nachteil zu vermeiden ist es auf der DE-U 92 05 979 bekannt, Distanzhalter mit kontrollierten, ringförmig geschlossenen oder einseitig offenen Profilabschnitten zu verwenden. Diese Distanzhalter bilden mit ihren die Stromschienen übergreifenden inneren Wandbereichen und ihren dem Stromschienenschutzkasten zugewandten äußeren Wandbereich wenigstens eine Durchgangsöffnung für den ungehinderten Luftdurchtritt zwischen dem Stromschienenschutzkasten und den die Stromschiene abdeckenden Wandbereichen. Dadurch wird zwar die Möglichkeit eines Luftaustausches geschaffen, eine unkontrollierte Längenausdehnung der Stromoschienenschutzkästen in beiden Richtungen wird dadurch jedoch nicht verhindert.

Aus der am 15.02.95 veröffentlichten EP-A 0 638 973 ist ein Distanzhalter für Stromschienenschutzkästen bekannt geworden, welcher in definierten Bereichen mit einer Anschlagbegrenzung für die Stimflächen der Stromschienenschutzkästen ausgestattet ist. Diese Anschlagbegrenzungen ragen in den Spaltabstand zwischen den freien Enden axial benachbarter Stromschienenschutzkästen von dem zugeordneten Distanzhalter auf und bilden auf diese Weise die Anschlagbegrenzung. Der Anschlag des freien Endes eines zugeordneten Stromschienenschutzkastens an der Anschlagbegrenzung des Distanzhalters bewirkt, daß ab diesem Zeitpunkt die weitergehende Längenänderung des Stromschienenschutzkastens in die entgegengesetzte Richtung vonstatten geht, so daß diese Längenänderung durch das übergreifende, muffenartige Deckelement des nächstfolgenden Stromschienenschutzkastens aufgenommen wird. damit sind die Stromschienenschutzkästen einseitig festgelegt, während auf der anderen Seite eine Längenänderung durch Ausdehnung möglich ist.

Obwohl diese Anordnung von Anschlagbegrenzungen auf den Distanzhalter zwischen den freien Enden axial benachbarter Stromschienenschutzkästen die gewünschte Wirkung erbringt, wird hier als Nachteil angesehen, daß jeweils zwei verschiedene Arten von Distanzhaltern verwendet werden müssen. So werden die mit den Anschlagbegrenzungen versehenen Distanzhalter nur an den freien Enden axial benachbarter Stromschienenschutzkästen eingesetzt, während über die gestreckte Länge der Stromschienenschutzkästen Distanzhalter ohne Anschlagbegrenzung eingesetzt werden.

Hier setzt die Neuerung ein, die es sich zu Aufgabe gestellt hat, diesen Nachteil zu vermeiden bei gleicher Wirkungsweise der Anschlagbegrenzungen. Neuerungsgemäß wird dazu ein Isolationsträger mit den Merkmalen des Anspruchs vorgeschlagen.

Mit dieser Anordnung der Anschlagbegrenzungen an die Außenseiten des Tragarms eines lsolationsträgers ist das Problem der unterschiedlichen Lagerhaltung der Distanzhalter aus dem Stand der Technik gelöst.

Die neuerungsgemäße Anschlagbegrenzung kann auf einer oder mehreren der zu den freien Enden der benachbarten Stromschienenschutzkästen gerichteten Außenseiten des Tragarms angeordnet sein. Es kann sich dabei um einen aus der zugeordneten Oberfläche des Tragarms oder einem an diese aus- bzw. angeformten Anschlagnocken oder eine Anschlagwulst handeln. Wesentlich hierbei ist, daß bei einer wärmebedingten Ausdehnung des Stromschienenschutzkastens nach dem Anschlag einer Stirnfläche des Stromschienenschutzkastens an der zugeordneten Anschlagbegrenzung die Richtung der weiteren Ausdehnung des Stromschienenschutzkastens umgekehrt wird, und zwar hin zu der Anschlagbegrenzung am gegenüberliegenden freien Ende des Stromschienenschutzkastens. Dabei sind die vorgegebenen Distanzen zwischen den freien Enden eines Stromschienenschutzkastens und an den beiden zugeordneten Anschlagbegrenzungen so gewählt, daß in allen Lagen das muffenartige Deckelement die Bereiche zwischen den freien Enden benachbarter Stromschienenschutzkästen und der zugeordneten Anschlagbegrenzung überdeckt.

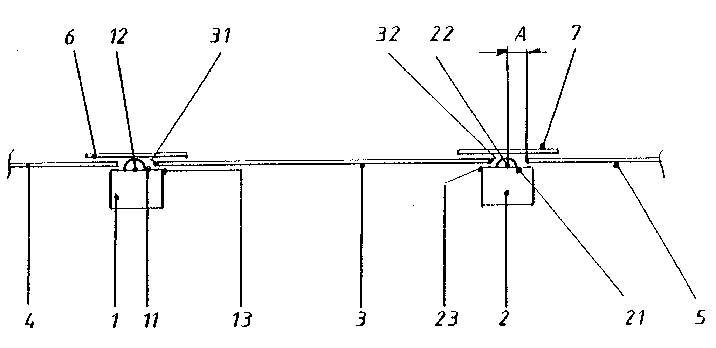

In der Zeichnung sind zwei Isolationsträger 1, 2 mit an der Außenseite 11, 21 angeordneten Anschlagbegrenzungen 12, 22 schematisch dargestellt. Die Distanz zwischen den beiden Isolationsträgern 1, 2 wird durch den Stromschienenschutzkasten 3 derart überbrückt, daß dessen freie Enden 31, 32 die Kanten 13, 23 noch überdecken. Zwischen den freien Enden 31, 32 des Stromschienenschutzkastens 3 und den jeweils zugeordneten Anschlagbegrenzungen 12, 22 der Isolationsträger 1, 2 ist ein systembedingter Verschiebeabstand A freigehalten.

In der Zeichnung sind ferner in axialer Richtung verlaufend die auf den Stromschienenschutzkasten 3 folgenden Stromschienenschutzkästen 4, 5 andeutet. Derselbe Verschiebeabstand A ist auch bei den folgenden Stromschienenschutzkästen 4, 5 gegeben, so daß jeder einzelne Stromschienenschutzkasten 3, 4, 5 die doppelte Distanz A für temperaturbedingte Längenänderungen zur Verfügung hat.

Der Bereich der Isolationsträger 1,2 mit den Anschlagbegrenzungen 12, 22 und den freien Verschiebeabständen A ist jeweils durch das muffenartige Deckelement 6, 7 abgedeckt. Dieses muffenartige Deckelement 6, 7 kann beispielsweise an einem freien Ende des zugeordneten Stromschienenschutzkastens 3 einstückig angeformt sein. Das muffenartige Deckelement 6, 7 kann aber auch durch Kleben oder durch mechanische Verbindung an dem freien Ende des Stromschienenschutzkastens 3, 4, 5 festgelegt sein.

Die Längenabmessungen der einzelnen Stromschienenschutzkästen 3, 4, 5 wird nach der Neuerung so eingestellt, daß keine Längenänderung mehr möglich ist, wenn die freien Enden benachbarter Stromschienenschutzkästen an den jeweiligen Anschlagbegrenzungen anliegen. Der Verschiebeabstand A muß demnach eine Größenordnung aufweisen, bei der die größtmögliche Ausdehnung entsprechend berücksichtigt ist, um Verwerfungen der axial benachbarten Stromschienenschutzkästen 3, 4 und 3, 5 untereinander zu vermeiden.

Die Isolationsträger 1, 2, bei denen das neuerungsgemäße Abstandhalteprinzip eingesetzt werden kann, können sowohl einteilig als auch mehrteilig ausgeführt sein. Der Einsatz ist sowohl bei Festisolatoren als auch bei höhenverstellbaren Isolatoren möglich.

## Patentansprüche

1. Isolationsträger für Stromschienen mit einem Fußteil und einem Tragarm für die Stromschiene, wobei das Fußteil mit dem Tragarm eine Halteaufnahme für den Haltebereich der Stromschiene bildet, wobei die Stromschiene von in definiertem Abstand zueinander stehenden Stromschienenschutzkästen (3, 4, 5) abgedeckt ist, welche durch auf der Stromschiene angeordnete Distanzhalter über der Stromschiene diese abdeckend festgelegt sind, wobei der definierte Abstand zwischen zwei benachbarten Stromschienenschutzkästen (3, 4, 5) durch ein muffenartiges Deckelement (6, 7) überdeckt ist, wobei an wenigstens einer der zu den freien Enden (31, 32) eines Stromschienenschutzkastens (3) gerichteten Außenseiten (11, 21) des Isolationsträgers (1, 2) eine Anschlagbegrenzung (12, 22) angeformt ist, welche in den von dem muffenartigen Deckelement (6, 7) überdeckten Spalt zwischen zwei benachbarten Stromschienenschutzkästen (3, 4) und (3, 5) aufragt, und wobei die vorgegebenen Distanzen zwischen den freien Enden (31, 32) eines Stromschienenschutzkastens (3) und den beiden zugeordneten Anschlagbegrenzungen (12, 22) so gewählt sind, daß das muffenartige Deckelement (6, 7) alle axialen Bedeckungsbereiche des Stromschienenschutzkasten (3) abdeckt.

## Claims

1. Insulation support for live rails with one base plate and one bracket for the live rail, whereby the base plate with the bracket constitutes a retaining assembly for the retention area of the live rails, whereby the live rail is covered by live-rail protective casings (3,4,5) which are a defined distance from one another, which are fixed over the live rail which they are covering by the distance spacers which are arranged over the live rail, whereby the defined distance between the two neighbouring live-rail protective casings (3,4,5) is covered by a coupling type cover element (6,7) whereby on at least one of the external faces (11,21) of the insulation support (1,2) directed to the free ends (31,32) of the live-rail protective casings (3) a stop limiter (12,22) is formed, which rises into the gap covered by the coupling type cover element (6 and 7) between the two neighbouring live-rail protective casings (3,4) and (3,5), whereby the given distances between the free ends (31,32) of one of the live-rail protective casings (3) and the two assigned stop limiters (12,22) are chosen in such a way that the coupling type cover element (6,7) covers all axial covering areas of the live-rail protective casings (3).

## Revendications

1. Support isolant pour rail conducteurs constitué d'un pied et d'un bras support pour le rail, caractérisé en ce que le pied et le bras support forment un logement pour la partie d'accrochage du rail, le rail conducteur étant recouvert de capots de protection (3,4,5) placés les uns par rapport aux autres à une distance définie, la position desdits capots étant déterminée par les entretoises placées sur le rail conducteur, la distance définie entre 2 capots de protection adjacents (3,4,5) étant recouverte d'un élément en forme de manchon (6,7), dont au moins une des extrémités libres (31,32) du capot de protection (3) alignées avec les faces latérales (11,21) de l'isolateur (1,2) présente une forme de butée limite (12,22), laquelle se positionne dans la forme de manchon de l'élément de recouvrement (6,7) et dans le jeu entre deux capots adjacents (3,4) et (3,5); la distance définie entre les deux extrémités libres (31,32) d'un capot de recouvrement (3) et les deux butées limites (12,22) est telle que les éléments de recouvrement en forme de manchon (6,7) recouvrent toutes parties axiales des capots de recouvrement.
